# DEMANDE DE BREVET EUROPEEN

(11) **EP 0 811 814 A1**
(43) Date de publication de la demande: **10.12.1997**
(21) Numéro de dépôt: 97108743.2
(22) Date de dépôt: 02.06.1997
(51) Int. Cl.: F25B 39/04

(54) **Condenseur à réservoir séparé pour installation de climatisation, notamment de véhicule automobile**

(30) Priorité: 05.06.1996 FR 9606931
(71) Demandeur: VALEO THERMIQUE MOTEUR, 78321 La Verrière (FR)
(72) Inventeur: Balthazard, Patrick, 02190 Guignicourt (FR)
(74) Mandataire: Gamonal, Didier

(57) **Abrégé**

Un condenseur parcouru par un fluide frigorigène comprend un faisceau de tubes monté entre de première et seconde (9) boîtes collectrices verticales, et un réservoir séparé (17) vertical installé au voisinage de la seconde boîte collectrice (9). Les parois (21,22) délimitant le réservoir et la seconde boîte collectrice comprennent respectivement de premier (23) et second (24) passages verticaux sur toute leur hauteur. Un moyen de liaison métallique (20) comporte de premier (29) et second (30) bords longitudinaux propres à être respectivement introduits dans les premier (23) et second (24) passages de sorte que les deux parois soient immobilisées l'une contre l'autre au niveau de leurs passages respectifs. Le moyen de liaison (20) comporte au moins une lumière (34,35) qui autorise la circulation du fluide frigorigène entre la seconde boîte collectrice et le réservoir, en un endroit choisi.

## Description

L'invention concerne les condenseurs de circuit de réfrigération, par exemple d'installation de climatisation de véhicule automobile.

Cette invention concerne plus précisément les condenseurs parcourus par un fluide frigorigène et comprenant une multiplicité de tubes formant un faisceau monté entre de première et seconde boîtes collectrices délimitées chacune par une paroi qui s'étend dans une direction sensiblement verticale, ainsi qu'un réservoir séparé délimité par une paroi s'étendant sensiblement verticalement et installé au voisinage de la seconde boîte collectrice.

Généralement, dans les condenseurs à réservoir séparé, la seconde boîte collectrice est réalisée par emboutissage d'une plaque métallique, tandis que le réservoir est formé par un tube profilé obtenu par extrusion. Le réservoir et la seconde boîte collectrice comportent chacun un orifice dans lequel est introduite l'une des extrémités d'un conduit de raccordement. La réalisation d'un tel orifice dans le tube profilé extrudé nécessite une attention particulière si l'on souhaite qu'elle ne génère pas de déformation de ce tube, et notamment dans la région qui délimite l'orifice. Une telle attention entraîne une augmentation des coûts de fabrication. De plus, l'opération d'étanchéification entre les extrémités du conduit de raccordement et les parois dans lesquelles elles sont introduites nécessite des opérations particulières qui augmentent encore le coût de fabrication de tels condenseurs.

Un but de l'invention est donc de procurer un condenseur à réservoir séparé qui ne présente pas les inconvénients précités.

L'invention propose à cet effet un condenseur du type défini en introduction, dans lequel, d'une part, les parois qui délimitent le réservoir et la seconde boîte collectrice comprennent respectivement de premier et second passages s'étendant verticalement sur au moins leurs étendues verticales (ou hauteurs) respectives, et d'autre part, on prévoit un moyen de liaison métallique comportant de premier et second bords longitudinaux qui s'étendent respectivement sur au moins les hauteurs du réservoir et de la seconde boîte collectrice et propres à être respectivement introduits dans les premier et second passages de sorte que les parois du réservoir et de la seconde boîte collectrice soient immobilisées l'une contre l'autre au niveau de leurs passages respectifs, le moyen de liaison comprenant en outre en au moins un endroit choisi une lumière propre à autoriser la circulation du fluide frigorigène entre la seconde boîte collectrice et le réservoir, et lesdits premier et second bords longitudinaux du moyen de liaison obturant respectivement les passages en dehors de la (ou des) lumière(s).

De la sorte, lors de l'assemblage du condenseur, et avant qu'il ne soit rendu étanche par introduction, par exemple, dans un four de brasage, le réservoir et la seconde boîte collectrice sont solidarisés l'un de l'autre grâce au moyen de liaison métallique dont les bords longitudinaux sont introduits dans des passages qu'ils comprennent respectivement. Dans la mesure où la lumière du moyen de liaison permet la communication directe entre les passages respectifs de la seconde boîte collectrice et du réservoir, il n'est donc plus nécessaire d'utiliser un conduit de raccordement pour permettre la circulation du fluide frigorigène entre ledit réservoir et ladite seconde boîte collectrice.

Selon une autre caractéristique de l'invention, les deux parois délimitant verticalement, respectivement le réservoir et la seconde boîte collectrice, sont des tôles conformées cylindriques dont les parties d'extrémités supérieure et inférieure sont destinées à être obturées par des cloisons terminales. La conformation peut consister simplement à rouler chaque tôle afin de lui donner la forme désirée.

Dans un mode de réalisation préférentiel du moyen de liaison métallique, celui-ci comprend en des parties supérieure et inférieure de chacun de ses bords longitudinaux, des ouvertures de forme choisie propres à autoriser l'enchâssement d'au moins les cloisons terminales obturant les parois dans lesquelles ils sont introduits.

Selon une autre caractéristique de l'invention, l'un au moins des bords longitudinaux du moyen de liaison supporte en au moins une zone prédéterminée une cloison intermédiaire propre à définir des sous-chambres dans l'espace délimité par la paroi qui comprend le passage dans lequel ledit bord est introduit. Chaque cloison intermédiaire est réalisée sous forme d'une plaque métallique supportée par enchâssement dans une ouverture réalisée au niveau de la zone prédéterminée.

De la sorte, chaque cloison intermédiaire destinée à être installée dans le réservoir et/ou la seconde boîte collectrice, est préalablement fixée sur le moyen de liaison, ce qui simplifie notablement le montage dans la mesure où il n'est plus nécessaire de prévoir des moyens de fixation des cloisons intermédiaires à l'intérieur du réservoir et/ou de la seconde boîte collectrice.

Préférentiellement, chaque lumière est réalisée, en l'endroit choisi, dans le second bord longitudinal.

Lorsque le condenseur est du type dit "multipasses", il est préférable que le second bord longitudinal comprenne deux lumières réalisées en de premier et second endroits choisis, et supporte deux cloisons intermédiaires métalliques en de première et seconde zones prédéterminées.

Cela permet de délimiter trois sous-chambres à l'intérieur de la seconde boîte collectrice, deux d'entre elles communiquant par l'intermédiaire des lumières avec ce réservoir pour permettre l'entrée du fluide frigorigène dans celui-ci, puis sa réintégration dans une partie inférieure du condenseur, après un éventuel traitement dans le réservoir.

Par ailleurs, dans ce type de réalisation multipasses, il est préférable que, d'une part, les cloisons terminales obturant la paroi délimitant la seconde boîte collectrice soient des plaques métalliques sensiblement identiques aux cloisons intermédiaires et enchâssées dans les ouvertures réalisées dans les parties supérieure et inférieure du second bord longitudinal du moyen de liaison, et que, d'autre part, les cloisons terminales obturant la paroi délimitant le réservoir soient des plaques métalliques conformées présentant une face convexe orientée vers l'intérieur du réservoir et propres à être enchâssées dans les ouvertures homologues réalisées dans les parties supérieure et inférieure du premier bord longitudinal du moyen de liaison.

Dans ce mode de réalisation particulier, les cloisons terminales du réservoir et de la seconde boîte collectrice sont, à l'image des cloisons intermédiaires, solidarisées au moyen de liaison, par enchâssement, avant même que les premier et second bords longitudinaux du moyen de liaison ne soient introduits respectivement dans les premier et second passages des parois.

Préférentiellement, le premier bord longitudinal du moyen de liaison comprend, en une zone prédéterminée comprise entre les deux endroits choisis où se trouvent réalisées les deux lumières, une ouverture propre à supporter par enchâssement une cloison intermédiaire destinée à définir deux sous-chambres à l'intérieur du réservoir, cette cloison intermédiaire comportant un trou, de préférence central, pour permettre la circulation du fluide frigorigène entre les deux sous-chambres.

Dans une telle configuration de réservoir à deux sous-chambres, il est possible de placer dans la sous-chambre supérieure, des moyens de dessiccation, ainsi qu'éventuellement un filtre, afin de pouvoir traiter le fluide frigorigène, lequel contient généralement de l'eau et des impuretés nuisibles au bon rendement du circuit de réfrigération dans lequel le condenseur est installé.

Selon encore une autre caractéristique de l'invention, la tôle délimitant la seconde boîte collectrice comprend une multiplicité de fentes calibrées, superposées, et destinées à recevoir chacune une extrémité de tube du faisceau de tubes. De telles fentes calibrées peuvent être obtenues avant conformation de la tôle, par découpe. Le second bord longitudinal forme ainsi, sur toute sa partie qui ne contient pas soit une lumière, soit une ouverture, une butée pour les extrémités des tubes qui se trouvent en regard. Cela permet d'éviter d'endommager les tubes en cas d'introduction sur une longueur trop importante à l'intérieur de la seconde boîte collectrice.

Selon encore une autre caractéristique de l'invention, le moyen de liaison est réalisé par découpe d'une plaque métallique sensiblement plane. Par ailleurs, l'étanchéité entre le réservoir, la seconde boîte collectrice et le moyen de liaison métallique est obtenue lors du passage du condenseur, une fois monté, dans un four par exemple de brasage.

Dans la description qui suit, faite à titre d'exemple, on se réfère aux dessins annexés, sur lesquels :
- les figures 1A et 1B illustrent respectivement un condenseur selon l'invention, dans des vues de côté et du dessus;
- la figure 2 est une vue en coupe transversale longitudinale du réservoir et de la seconde boîte collectrice, représentés sur la figure 1A; et
- la figure 3 est une vue en coupe transversale, selon l'axe III-III, du réservoir et de la seconde boîte collectrice, représentés sur les figures 1A et 2.

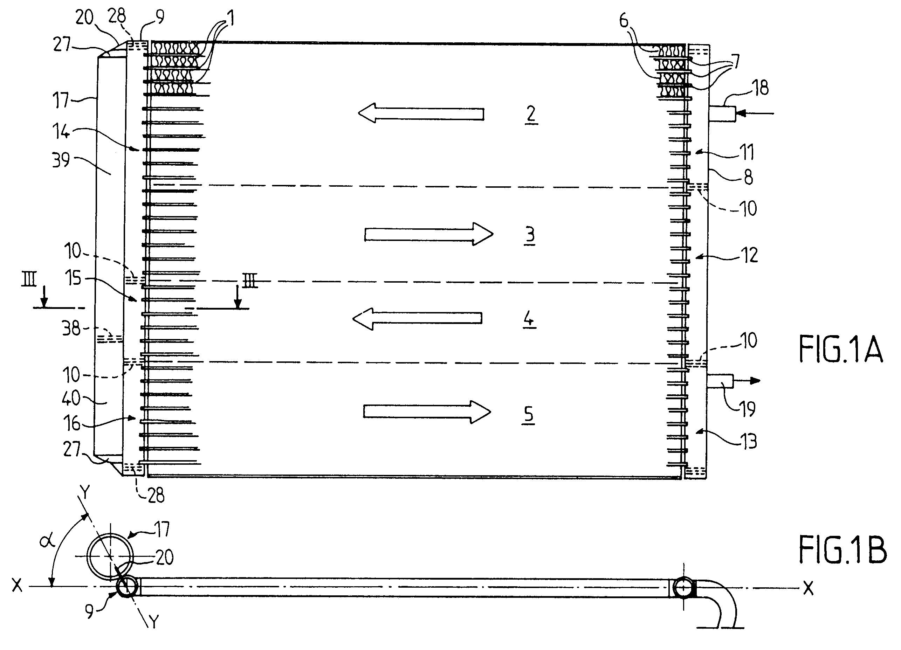

On se réfère tout d'abord aux figures 1A et 1B pour décrire la circulation du fluide frigorigène à l'intérieur d'un condenseur à réservoir séparé.

Dans toute la description, on considérera que le condenseur est du type dit "multipasses", et qu'il fait partie d'un circuit de réfrigération d'une installation de climatisation de véhicule automobile. Bien entendu, un tel condenseur pourrait servir dans d'autres applications, et présenter des configurations différentes.

Le condenseur comprend une multiplicité de tubes parallèles 1 (partiellement représentés) et formant un faisceau subdivisable, dans cet exemple, en quatre sous-faisceaux, un sous-faisceau 2 dit amont, un sous-faisceau 3 dit intermédiaire supérieur, un sous-faisceau 4 dit intermédiaire inférieur, et un sous-faisceau 5 dit aval.

Les tubes du faisceau sont généralement horizontaux, plats et séparés les uns des autres par des intercalaires ondulés 6 (partiellement représentés) dont la fonction est de favoriser les échanges thermiques entre le fluide frigorigène qui circule à l'intérieur des tubes et l'air qui circule entre ces tubes.

Les tubes 1 comprennent des extrémités respectives 7 montées entre deux boîtes collectrices 8 et 9 de forme générale tubulaire, parallèles entre elles et sensiblement perpendiculaires (verticales) au faisceau.

Chaque boîte collectrice est subdivisée en sous-chambres par l'intermédiaire de cloisons 10 sur lesquelles on reviendra plus loin. Ainsi, une première boîte collectrice 8 (qui pourra être réalisée par un procédé approprié, connu de l'homme de l'art) comprend, dans sa partie supérieure, une première sous-chambre 11 qui communique avec le sous-faisceau amont 2, dans une partie intermédiaire, une seconde sous-chambre 12 qui communique avec les sous-faisceaux intermédiaires 3 et 4, et dans une partie inférieure, une troisième sous-chambre 13 qui communique avec le sous-faisceau aval 5. La seconde boîte collectrice 9 comprend, dans une partie supérieure, une première sous-chambre 14 qui communique avec le sous-faisceau amont 2 et le sous-faisceau intermédiaire supérieur 3, dans une partie intermédiaire, une seconde sous-chambre 15 qui communique avec le sous-faisceau intermédiaire inférieur 4, et dans une partie inférieure, une troisième sous-chambre 16 qui communique avec le sous-faisceau aval 5.

La seconde boîte collectrice 9 communique également avec un réservoir 17, d'une part par sa seconde sous-chambre 15, et d'autre part par sa troisième sous-chambre 16.

Sur la figure 1A, les flèches indiquent le sens de circulation du fluide frigorigène à l'intérieur du condenseur. Celui-ci pénètre dans le condenseur, en une phase vapeur surchauffée, par une tubulure d'entrée 18 qui communique avec la première sous-chambre 11 de la première boîte collectrice 8. Afin de se refroidir progressivement tout en se condensant, il circule dans les sous-faisceaux 2, 3 et 4 qui communiquent entre eux par l'intermédiaire de la première sous-chambre 14 de la seconde boîte collectrice 9 et de la seconde sous-chambre 12 de la première boîte collectrice 8. Le fluide frigorigène débouche alors dans la seconde sous-chambre 15 de la seconde boîte collectrice 9, pénètre dans une partie supérieure du réservoir 17, où il est éventuellement traité, puis descend dans la partie inférieure de ce réservoir pour regagner la troisième sous-chambre 16 de la seconde boîte collectrice 9. De là, il retourne dans le sous-faisceau aval 5, pénètre dans la troisième sous-chambre 13 de la première boîte collectrice 8, puis retourne dans le circuit de réfrigération grâce à une tubulure de sortie 19.

Il est clair que cette configuration de condenseur de type multipasses n'est en aucune façon limitative, de nombreuses autres configurations peuvent être envisagées.

La figure 1B illustre, dans une vue du dessus, le condenseur de la figure 1A. Dans cet exemple, l'axe YY d'alignement du réservoir 17 et de la seconde boîte collectrice 9 est décalé d'un angle α supérieur à 45° par rapport à l'axe d'alignement XX de la seconde boîte collectrice 9 et des tubes du faisceau.

Le réservoir 17 et la seconde boîte collectrice 9 sont de forme tubulaire, cylindrique à section transverse circulaire, le diamètre du, réservoir 17 étant notablement supérieur à celui de la seconde boîte collectrice 9 afin de permettre au fluide frigorigène qui pénètre dans le réservoir 17 de réduire sa vitesse, et d'assurer audit réservoir sa fonction de réserve de fluide frigorigène.

Il est clair que les diamètres respectifs de ce réservoir 17 et de la seconde boîte collectrice 9 peuvent être adaptés selon les besoins.

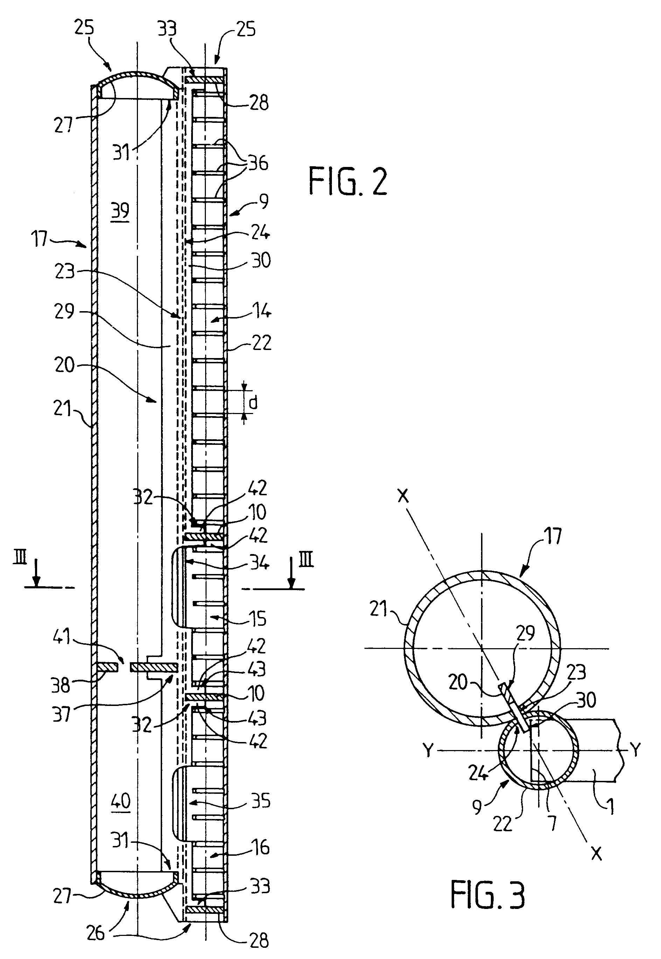

Le réservoir 17 et la seconde boîte collectrice 9 sont solidaires l'un de l'autre grâce à un moyen de liaison 20 qui va être décrit ci-après en référence aux figures 2 et 3.

Le réservoir 17 et la seconde boîte collectrice 9 sont formés respectivement par des parois 21 et 22 qui s'étendent verticalement. Chacune de ces parois 21 et 22 est une tôle métallique découpée puis roulée. Comme cela est illustré, les hauteurs respectives du réservoir 17 et de la seconde boîte collectrice 9 ne sont pas nécessairement identiques. Les bords longitudinaux opposés de chaque paroi sont sensiblement parallèles et en regard l'un de l'autre, sans se toucher, de sorte qu'un passage vertical 23 ou 24, respectivement, subsiste sur toute la hauteur de chaque paroi 21 ou 22. Les extrémités libres, supérieure 25 et inférieure 26 de chaque paroi, sont destinées à être obturées par des cloisons terminales métalliques 27 ou 28.

Préférentiellement, les cloisons terminales 27 du réservoir 17 sont réalisées dans une plaque métallique conformée sous forme de capuchon bombé convexe, la face interne convexe étant destinée à être orientée vers l'intérieur du' réservoir. Les cloisons terminales 28 de la seconde boîte collectrice 9 sont, préférentiellement, sensiblement identiques aux cloisons intermédiaires 10, et réalisées dans des plaques métalliques de dimensions sensiblement identiques à la section transverse de la boîte collectrice 9.

La liaison entre le réservoir 17 et la seconde boîte collectrice 9 est effectuée par le moyen de liaison 20. Ce dernier est obtenu par découpe d'une plaque métallique de hauteur au moins égale à la hauteur du plus haut des deux éléments parmi le réservoir et la boîte collectrice. Le moyen de liaison 20 comprend deux bords longitudinaux (verticaux) 29 et 30 destinés à être introduits respectivement dans les passages 23 et 24 des parois 21 et 22 qui délimitent le réservoir 17 et la seconde boîte collectrice 9. En conséquence, l'épaisseur du moyen de liaison (ou de la plaque) est sensiblement identique à la largeur des passages 21 et 22.

Ce moyen de liaison 20 comprend aux extrémités supérieure et inférieure de son premier bord longitudinal 29 deux ouvertures 31 de forme choisie pour permettre l'enchâssement et le support des cloisons terminales bombées 27.

Le second bord longitudinal 30 du moyen de liaison 20 comporte, d'une part, de premières ouvertures 32 dans lesquelles sont enchâssées les cloisons intermédiaires 10 et d'autre part, de secondes ouvertures 33 dans lesquelles sont enchâssées les cloisons terminales supérieure et inférieure 28 destinées à obturer les extrémités libres supérieure 25 et inférieure 26 de la paroi 22 qui délimite la seconde boîte collectrice 9. De la sorte, les cloisons terminales 28 et intermédiaire 10 sont supportées par les ouvertures 33 et 32 réalisées dans le second bord longitudinal 30.

Ainsi, le réservoir 17 et la seconde boîte collectrice 9 ne comportent pas d'autre pièce que leur paroi 21 ou 22.

Afin de permettre la circulation du fluide frigorigène entre la seconde boîte collectrice 9 et le réservoir 17, on prévoit, de préférence dans le second bord longitudinal 30 du moyen de liaison 20, deux lumières 34 et 35. La première lumière 34 est réalisée en un premier endroit choisi, entre les deux cloisons intermédiaires 10 qui délimitent la seconde sous-chambre 15 de la seconde boîte collectrice 9, lesquelles sont placées en des zones prédéterminées qui dépendent de la configuration du condenseur. La seconde lumière 35 est réalisée en un second endroit choisi, entre la cloison intermédiaire 10 qui sépare les seconde 15 et troisième 16 sous-chambres de la seconde boîte collectrice 9, et la cloison terminale 28 inférieure de cette boîte collectrice.

La paroi 22 de la seconde boîte collectrice 9 comporte en outre une multiplicité de fentes calibrées 36 superposées les unes au-dessus des autres, et de dimensions sensiblement identiques aux dimensions externes des extrémités 7 des tubes 1 du faisceau. De telles fentes 36 sont réalisées par découpe, avant conformation de la paroi 22. Les fentes calibrées 36 ne sont pas directement en regard du passage 24 de sorte que les tubes qui sont introduits dans lesdites fentes selon l'axe YY soient inclinés par rapport au moyen de liaison 20 qui, lui, est contenu dans un plan parallèle à la direction XX. Ainsi, le second bord longitudinal 30 du moyen de liaison 20 peut servir de butée aux extrémités des tubes qui débouchent dans la seconde boîte collectrice 9 en des endroits où ledit second bord ne comprend pas de lumière ou d'ouverture. Cela permet, d'une part, d'éviter que les tubes ne soient introduits sur une distance trop importante à l'intérieur de la seconde boîte collectrice, ce qui pourrait les endommager, les rendant ainsi au moins partiellement inutilisables, et d'autre part, endommager le revêtement interne de la paroi 22.

Préférentiellement, le premier bord longitudinal 29 du moyen de liaison 20 comprend également en un endroit choisi, par exemple dans une partie inférieure, une ouverture 37, du type de celles 32 et 33 réalisées dans le second bord longitudinal 30, destinée à supporter par enchâssement une cloison intermédiaire 38 de dimensions sensiblement identiques à la section transverse du réservoir 17. Ainsi, le réservoir 17 est subdivisé en deux sous-chambres, une sous-chambre supérieure 39 dans laquelle peuvent être logés des moyens de dessiccation, et éventuellement un filtre pour supprimer les impuretés contenues dans le fluide frigorigène, et une sous-chambre inférieure 40 destinée à recueillir le fluide frigorigène après traitement dans la sous-chambre supérieure 39. Pour ce faire, la cloison intermédiaire 38 comprend, de préférence dans une position centrale, un trou 41 permettant l'écoulement du fluide frigorigène de la sous-chambre 39 vers la sous-chambre 40.

L'assemblage d'un condenseur selon l'invention s'effectue comme suit :
- dans une première étape, on enchâsse dans les ouvertures 31, et éventuellement 37, du premier bord longitudinal 29 du moyen de liaison 20 respectivement les cloisons terminales 27 et la cloison intermédiaire 38, puis on enchâsse dans les ouvertures 33 et 32 du second bord longitudinal 30 du moyen de liaison 20 respectivement les cloisons terminales 33 et les cloisons intermédiaires 10;
- dans une seconde étape, on introduit, par coulissement vertical, le premier bord longitudinal 29 du moyen de liaison 20 dans le passage 23 de la paroi 21 du réservoir 17, jusqu'à ce que les cloisons terminales 27 obturent totalement, respectivement, les extrémités supérieure 25 et inférieure 26 de cette paroi 21, le frottement entre les bords longitudinaux des cloisons terminales 27 et la face interne de la paroi 21 assurant alors la solidarisation entre le moyen de liaison 20 et le réservoir 17;
- dans une troisième étape, on introduit, par coulissement vertical, le second bord longitudinal 30 du moyen de liaison 20 dans le passage 24 de la paroi 22 qui délimite la seconde boîte collectrice 9, jusqu'à ce que les cloisons terminales 28 obturent totalement, respectivement, les extrémités supérieure 25 et inférieure 26 de cette paroi 22, les parois du réservoir 21 et de la seconde boîte collectrice 22 sont alors immobilisées l'une contre l'autre au niveau de leurs passages respectifs 23 et 24; et
- dans une quatrième étape, on introduit les extrémités 7 des tubes dans les fentes calibrées 36 de la paroi 22 délimitant la seconde boîte collectrice 9.

La solidarisation de la seconde boîte collectrice au moyen de liaison 20, est assurée avantageusement par la présence, au moins autour des endroits choisis pour réaliser les ouvertures 32, de saillies 42 dont les faces externes parallèles 43 sont espacées l'une de l'autre d'une distance sensiblement égale à celle (d) séparant deux fentes calibrées. Ainsi, les deux saillies 43 autour d'une ouverture sont encadrées par deux extrémités de tubes voisins, ce qui suffit à immobiliser la seconde boîte collectrice 9 relativement au moyen de liaison.

Une fois le condenseur assemblé, son étanchéité complète est obtenue au cours d'un passage dans un four, par exemple de brasage. Pour ce faire, les faces des éléments métalliques sont recouvertes, de façon connue, d'un placage approprié.

Une telle invention permet une grande flexibilité dans le choix des dimensions relatives de la boîte collectrice et du réservoir voisin, de notables réductions des coûts de fabrication, et une simplification de l'assemblage du condensateur.

L'invention ne se limite pas au mode de réalisation décrit ci-avant, mais elle embrasse toutes les variantes que pourra développer l'homme de l'art dans le cadre des revendications ci-après.

Ainsi, les formes et hauteurs respectives du réservoir et de la seconde boîte collectrice pourront différer des formes illustrées sur les figures. De même, la configuration du condenseur pourra varier sensiblement de celle décrite, et par conséquent les positions et le nombre de cloisons intermédiaires, et éventuellement de lumières pourront être notablement différents de ceux décrits précédemment, en référence aux figures.

## Revendications

1. Condenseur, notamment pour un circuit de réfrigération parcouru par un fluide frigorigène, du type comprenant une multiplicité de tubes (1) formant un faisceau monté entre de première (8) et seconde (9) boîtes collectrices délimitées chacune par une paroi (22) s'étendant dans une direction sensiblement verticale, et un réservoir séparé (17) délimité par une paroi (21) s'étendant sensiblement verticalement, et installé au voisinage de la seconde boîte collectrice (9),
caractérisé en ce que lesdites parois (21,22) délimitant le réservoir (17) et la seconde boîte collectrice (9) comprennent respectivement de premier (23) et second (24) passages s'étendant verticalement sur leurs étendues verticales (ou hauteurs) respectives, et
en ce qu'il comprend un moyen de liaison (20) métallique comportant de premier (29) et second (30) bords longitudinaux s'étendant respectivement sur au moins les hauteurs du réservoir (17) et de la seconde boîte collectrice (9) et propres à être respectivement introduits dans les premier (23) et second (24) passages de sorte que les parois du réservoir (21) et de la seconde boîte collectrice (22) soient immobilisées l'une contre l'autre au niveau de leurs passages respectifs, ledit moyen de liaison (20) comportant en au moins un endroit choisi une lumière (34,35) propre à autoriser la circulation du fluide frigorigène entre la seconde boîte collectrice et le réservoir, et lesdits premier (29) et second (30) bords longitudinaux du moyen de liaison (20) obturant respectivement les passages (23,24) en dehors de la (ou des) lumière(s) (34,35).

2. Condenseur selon la revendication 1, caractérisé en ce que les deux parois (21,22) délimitant verticalement, respectivement, le réservoir (17) et la seconde boîte collectrice (9) sont des tôles conformées cylindriques dont les parties d'extrémité supérieure (25) et inférieure (26) sont destinées à être obturées par des cloisons terminales (27,28).

3. Condenseur selon la revendication 2, caractérisé en ce que chaque bord longitudinal (29,30) du moyen de liaison (20) comprend, en des parties supérieure et inférieure, des ouvertures de formes choisies (31,33) propres à autoriser l'enchâssement d'au moins les cloisons terminales (27,28) obturant la paroi (21,22) qui comprend le passage (23,24) dans lequel il est introduit.

4. Condenseur selon l'une des revendications 1 à 3, caractérisé en ce que l'un au moins des bords longitudinaux (29,30) du moyen de liaison (20) supporte en au moins une zone prédéterminée une cloison intermédiaire (38,10) propre à définir des sous-chambres (39,40;14-16) dans l'espace délimité par la paroi (21,22) qui comprend le passage (23,24) dans lequel il est introduit.

5. Condenseur selon la revendication 4, caractérisé en ce que la cloison intermédiaire (38,10) est une plaque métallique supportée par enchâssement dans une ouverture (37,32) réalisée en la zone prédéterminée.

6. Condenseur selon l'une des revendications 1 à 5, caractérisé en ce que chaque lumière (34,35) est réalisée, en un endroit choisi, dans le second bord longitudinal (30).

7. Condenseur selon l'une des revendications 1 à 6, caractérisé en ce que le second bord longitudinal (30) comprend deux lumières (34,35) réalisées en de premier et second endroits choisis, et supporte deux cloisons intermédiaires (10) métalliques en de première et seconde zones prédéterminées.

8. Condenseur selon l'une des revendications 3 à 7, caractérisé en ce que les cloisons terminales (28) obturant la paroi (22) délimitant la seconde boîte collectrice (9) sont des plaques métalliques sensiblement identiques aux cloisons intermédiaires (10) et enchâssées dans les ouvertures (32) réalisées dans les parties supérieure et inférieure du second bord longitudinal (30) du moyen de liaison (20), et en ce que les cloisons terminales (27) obturant la paroi (21) délimitant le réservoir (17) sont des plaques métalliques conformées présentant une face convexe orientée vers l'intérieur dudit réservoir et propres à être enchâssées dans les ouvertures (31) réalisées dans les parties supérieure et inférieure du premier bord longitudinal (29) du moyen de liaison (20).

9. Condenseur selon la revendication 8, caractérisé en ce que le premier endroit choisi est situé entre les deux zones prédéterminées où se trouvent supportées les deux cloisons intermédiaires (10) de la seconde boîte collectrice (9), et le second endroit choisi est situé dans la partie inférieure du moyen de liaison (20) entre l'une desdites zones prédéterminées et la cloison terminale inférieure (28) de cette seconde boîte collectrice (9).

10. Condenseur selon l'une des revendications 7 à 9, caractérisé en ce que le premier bord longitudinal (29) du moyen de liaison (20) comprend, en une zone prédéterminée comprise entre les deux endroits choisis où se trouvent réalisées les deux lumières (34,35), une ouverture (37) propre à supporter par enchâssement une cloison intermédiaire (38) destinée à définir deux sous-chambres (39,40) dans le réservoir (17), cette cloison intermédiaire comportant un trou (41) pour permettre la circulation du fluide frigorigène entre lesdites deux sous-chambres.

11. Condenseur selon l'une des revendications 2 à 10, caractérisé en ce que la paroi (22) délimitant la seconde boîte collectrice (9) comprend une multiplicité de fentes (36) calibrées, superposées, et destinées à recevoir chacune une extrémité (9) de tube (1) du faisceau de tubes, le second bord longitudinal (30) formant, sur toute sa partie ne contenant pas de lumière (34,35) ou d'ouverture (32,33), butée pour les extrémités de tubes.

12. Condenseur selon l'une des revendications précédentes, caractérisé en ce que le moyen de liaison (20) est réalisé par découpe d'une plaque métallique sensiblement plane.

13. Condenseur selon l'une des revendications précédentes, caractérisé en ce que l'étanchéité entre le réservoir (17), la seconde boîte collectrice (9) et le moyen de liaison métallique (20) est obtenu par brasage ou soudage.

14. Condenseur selon l'une des revendications 11 à 13, caractérisé en ce qu'au moins le second bord longitudinal (30) comprend, de part et d'autre des ouvertures (32,33) supportant les cloisons intermédiaires (10) de la seconde boîte collectrice (9), des saillies 42 dont les faces externes 43 sont distantes l'une de l'autre d'une distance égale à la distance (d) séparant deux fentes calibrées (36).
